# FASCICULE DE BREVET EUROPEEN

(11) **EP 1 439 119 B1**
(45) Date de publication et mention de la délivrance du brevet: **23.03.2011**
(21) Numéro de dépôt: 04300000.9
(22) Date de dépôt: 02.01.2004
(51) Int. Cl.: B63B 35/32, E02B 15/04

(54) **Navire de récupération d'hydrocarbures polluants flottant à la surface de l'eau**
Schiff zum Aufnehmen von auf der Wasseroberfläche schwimmenden, verunreinigenden Kohlenwasserstoffen
Ship for the recovery of polluting hydrocarbons floating on the water surface

(30) Priorité: 17.01.2003 FR 0300482
(43) Date de publication de la demande: 21.07.2004
(73) Titulaire: STX FRANCE S.A., 44613 Saint Nazaire Cedex (FR)
(72) Inventeur: Gaudin, Christian, 95270 Asnieres sur Oise (FR)
(74) Mandataire: Branger, Jean-Yves

(56) Documents cités:
- DE-A- 3 500 581
- FR-A- 2 686 567
- GB-A- 1 522 803
- SU-A- 1 395 757
- US-A- 3 730 119
- US-A- 5 217 611
- PATENT ABSTRACTS OF JAPAN vol. 005, no. 039 (M-059), 14 mars 1981 (1981-03-14) & JP 55 164586 A (MITSUBISHI HEAVY IND LTD), 22 décembre 1980 (1980-12-22)

## Description

La présente invention concerne un navire de récupération de produits polluants de type hydrocarbure telles que par exemple de produits pétroliers, flottant à la surface d'une étendue d'eau.

On connaît de nombreux procédés et dispositifs permettant de retenir et d'enlever des produits polluants de type hydrocarbure flottant à la surface de la mer par exemple à la suite d'un naufrage de navire ou bien lors d'une décharge incontrôlée se produisant à partir d'un puits de pétrole sur le fond de la mer.

Le document FR-A-2 686 567, qui est consideré comme étant l'état de la technique le plus proche, concerne un navire selon le préambule de la revendication 1.

Un de ces dispositifs consiste à utiliser une toile flexible ou équivalent formée d'une matière dense et qui est maintenue à l'aide de flotteurs en flottaison sur la surface de l'eau par la partie supérieure, tandis que le reste du dispositif est orienté verticalement dans la mer, habituellement sous l'action d'un contrepoids placé le long de son bord inférieur. Ce genre de dispositif collecteur doit être généralement actionné par différents navires ou par des navires spéciaux, à la fois en ce qui concerne le montage et la mise en place.

A l'usage, il est apparu que ce dispositif collecteur connu présente de nombreuses difficultés et n'est pas aussi efficace que l'on pourrait l'espérer en ce qui concerne la retenue et la collecte des produits pétroliers, notamment dans le cas d'une mer houleuse ayant des courants forts et des vagues courtes et changeantes. De ce fait, compte tenu de l'absence de stabilité de flottaison, des produits pétroliers peuvent dans certaines circonstances s'échapper aisément par dessus ou par dessous la toile.

On connaît également un certain nombre de navires spéciaux qui récupèrent les produits polluants de type hydrocarbure répandus en larges plaques à la surface de la mer et qui canalisent ces produits jusqu'à des réservoirs de stockage.

Il est connu des navires présentant une rampe inclinée dans le sens de son déplacement configurée en plaque à écumer et qui se prolonge dans un réservoir collecteur servant de chambre de décantation. De tel dispositif ne donne pas entièrement satisfaction étant donnée que son efficacité est limitée du fait que la plaque à écumer, notamment lorsque la mer est agitée, récupère un mélange qui est essentiellement formé d'eau. Par ailleurs l'enfoncement variable du navire contribue au manque de rentabilité de ce genre de dispositif.

On connaît également des navires de récupération qui comportent des bouches d'aspiration reliées à des moyens de pompage pour transférer les produits polluants flottant à la surface de la mer vers un réservoir de stockage. Mais, dans le cas de produits pétroliers présentant une forte viscosité, les bouches d'aspiration et les moyens de pompage sont rapidement obstrués et l'ensemble n'est plus opérationnel.

D'une manière générale, les navires collecteurs utilisés présentent une efficacité limitée et sont tributaires des conditions atmosphériques.

De plus, il présente une capacité de stockage limitée si bien qu'ils doivent retourner très souvent vers le port le plus proche pour décharger les produits polluants récupérés.

Or on sait que la rapidité d'intervention est un facteur essentiel de façon à éviter que les nappes de produits pétroliers atteignent le rivage le plus proche.

L'invention a donc pour but de proposer un navire de récupération de matières polluantes de type hydrocarbure flottant à la surface de la mer qui remédie aux difficultés précédemment mentionnées et qui permet de collecter et d'enlever efficacement ces produits en pleine mer, même lors de conditions atmosphériques mauvaises.

Selon l'invention objet de la revendication 1, lesdits moyens de récupération sont situés au voisinage du point tranquille du navire, c'est à dire au niveau de l'axe de rotation du navire au tangage.

Ainsi, le ramassage des matières polluantes à la surface de l'eau s'effectue à l'abri de la houle, une partie de la nappe polluée étant retenue dans les deux canaux latéraux et sa surface étant de cette manière calmée par son confinement et la viscosité du produit la constituant.

Selon le cas, les moyens de récupération sont des écopes, des roues à godets, des pompes ou tout autre dispositif connu de récupération d'hydrocarbure et sont conçus de manière modulaire et installés en fonction du type de matière polluante à récupérer.

Selon une autre caractéristique, lesdits moyens de récupération sont positionnés, pour chaque canal latéral, sur un support flottant relié à un plafond de liaison du flotteur latéral correspondant à la coque centrale.

Selon une autre caractéristique, un dit support flottant comprend deux éléments latéraux flottants reliés entre eux par au moins deux poutres situées respectivement à l'avant et à l'arrière desdits éléments latéraux flottant dans leur partie supérieure et les moyens de récupération sont positionnés entre ces deux éléments latéraux et les deux dites poutres et au niveau de la ligne de flottaison du support flottant.

Selon une autre caractéristique, un dit support flottant est relié audit plafond par un système de suspension articulé à parallélogramme maintenant ledit support flottant dans un plan parallèle au plan général du navire.

Selon une autre réalisation de l'invention, le support flottant est relié audit plafond par des moyens coulissants perpendiculaires au plan général du navire.

Une fois les produits polluants récupérés par les moyens de récupération, ils sont transférés vers des zones de retraitement / de décantation et de cuves de stockage situées dans la coque principale du navire, celle-ci permettant d'offrir une grande capacité de stockage. Les moyens de transfert de produits polluants des moyens de récupération vers les zones de retraitement / de décantation sont constitués par exemple par des moyens de pompage ou par des transporteurs à vis sans fin ou par tout autre moyen connu de l'homme de métier du retraitement.

Avantageusement, un produit dispersant est répandu simultanément à la surface de la mer de manière à décomposer les résidus d'hydrocarbures en de fines gouttelettes inoffensives. Les moyens de dispersion sont par exemple positionnés à l'arrière de chaque support flottant de façon à épandre le produit dispersant directement sur les produits polluants non captés par les moyens de récupération.

D'autres caractéristiques et avantages de l'invention apparaîtront à la lecture de la description qui va suivre, donnée à titre d'exemple et fait en référence aux dessins annexés, sur lesquels :
la figure 1 est une coupe horizontale schématique d'un navire de récupération selon l'invention,
   - la figure 2 est une coupe horizontale schématique de la zone du navire selon l'invention où les moyens de récupération sont positionnés,
   - la figure 3 est une coupe transversale d'un canal latéral du navire avec les moyens de récupération selon l'invention en position de récupération,
   - la figure 4 : coupe verticale d'un canal latéral du navire avec les moyens de récupération selon l'invention en position de récupération,
   - la figure 5 : coupe verticale d'un canal latéral du navire avec les moyens de récupération selon l'invention en position de repos.

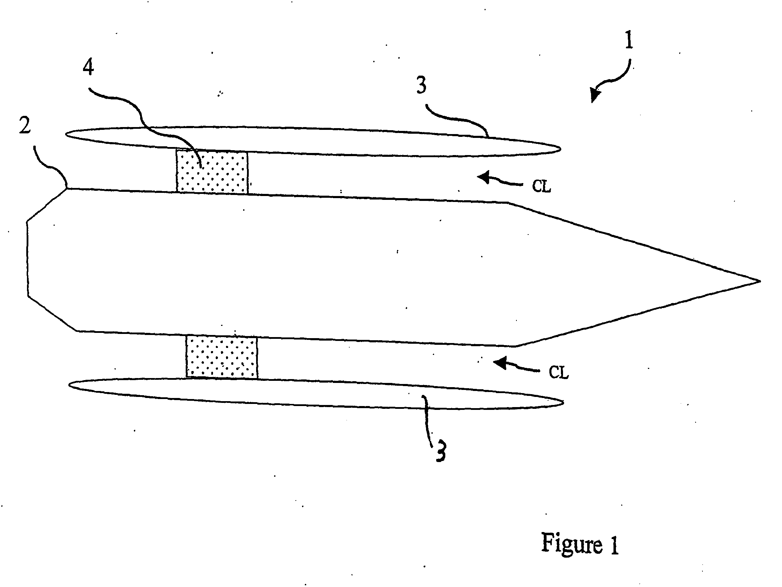

   Sur la figure 1, on a représenté schématiquement une coupe horizontale d'un navire 1 selon l'invention. Le navire 1 conforme à l'invention pour récupérer avant qu'ils n'arrivent sur le littoral, des matières polluantes de type hydrocarbure telles que par exemple des produits pétroliers, flottant à la surface de l'eau de mer ou d'eau douce, se compose d'une grande coque centrale 2 et de deux flotteurs latéraux 3 créant ainsi deux canaux latéraux CL. La zone 4 représente une zone de récupération des produits polluants au niveau des deux canaux latéraux CL, cette zone étant avantageusement à l'abri de la houle car située au point tranquille du navire c'est à dire au niveau de l'axe de rotation longitudinal du navire au tangage et la surface de l'eau étant calmée par son confinement dans les canaux latéraux CL et aussi par la viscosité du produit polluant la recouvrant.

Le navire 1 selon l'invention est un grand trimaran dont la stabilité est assurée par des flotteurs latéraux 3 de type swath. Il présente une longueur supérieure à 100 m et de préférence d'environ 136 m et une largeur d'environ 32 m, la largeur des canaux latéraux CL étant alors d'environ 5 m et la longueur des flotteurs latéraux 3 d'environ 90 m.

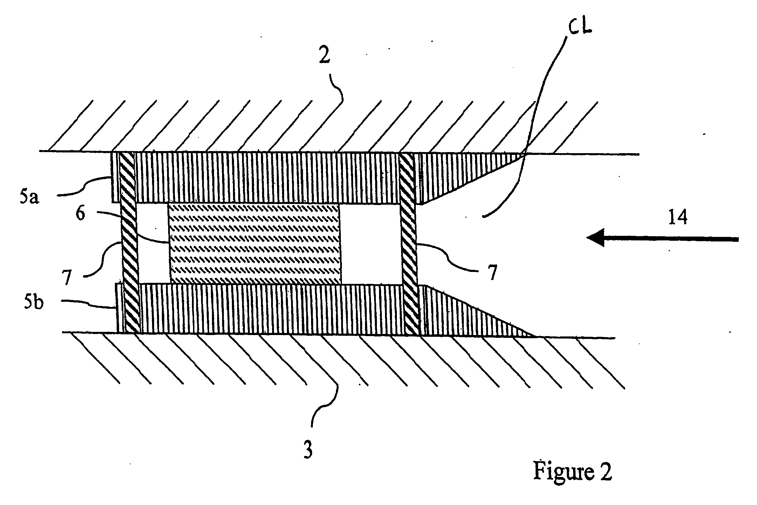

La figure 2 représente une coupe horizontale schématique d'un canal latéral CL du navire 1 avec les moyens de récupération 6 situés dans un support flottant 5a, 5b, 7 situé lui-même entre la coque centrale 2 et un flotteur latéral 3. De préférence la largeur du support flottant 5a, 5b, 7 est sensiblement égale à la largeur du canal latéral CL. Selon cette représentation, le support flottant 5a, 5b, 7 est constitué de deux éléments latéraux flottant 5a et 5b. Les deux éléments latéraux 5a et 5b sont reliés entre eux par deux poutres 7 situées respectivement à l'avant et l'arrière des éléments 5a et 5b dans leur partie supérieure. Les éléments 5a et 5b présentent avantageusement sur leur partie avant une forme biseautée créant ainsi une ouverture 14 en V. Cette ouverture 14 en V amène les produits polluants vers les moyens de récupération 6 positionnés entre les deux éléments 5a et 5b et les deux poutres 7, créant ainsi un canal restreint permettant d'augmenter l'épaisseur de la couche facilitant ainsi la récupération et les moyens de récupération 6 présentant, de manière avantageuse pour la récupération, une largeur sensiblement égale à la distance entre les deux éléments 5a et 5b.

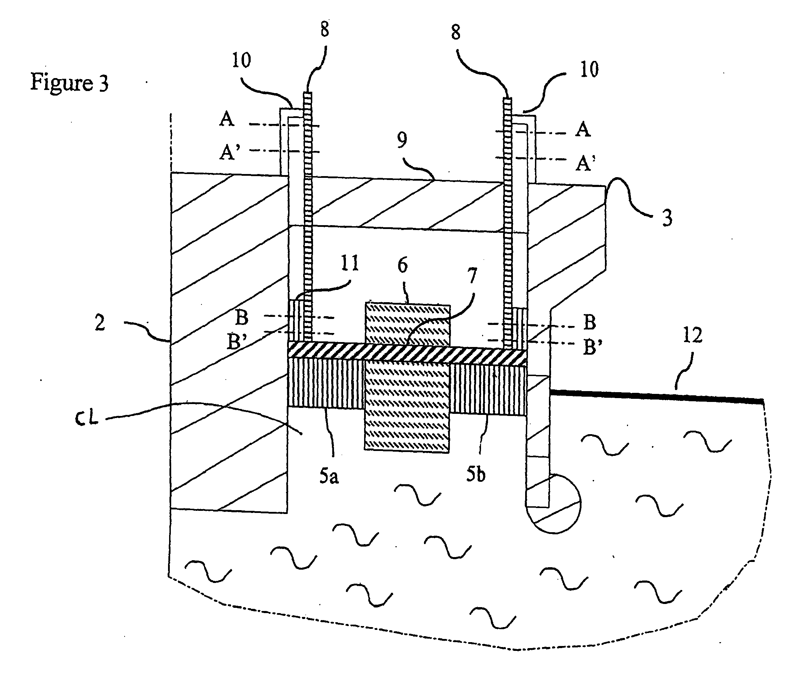

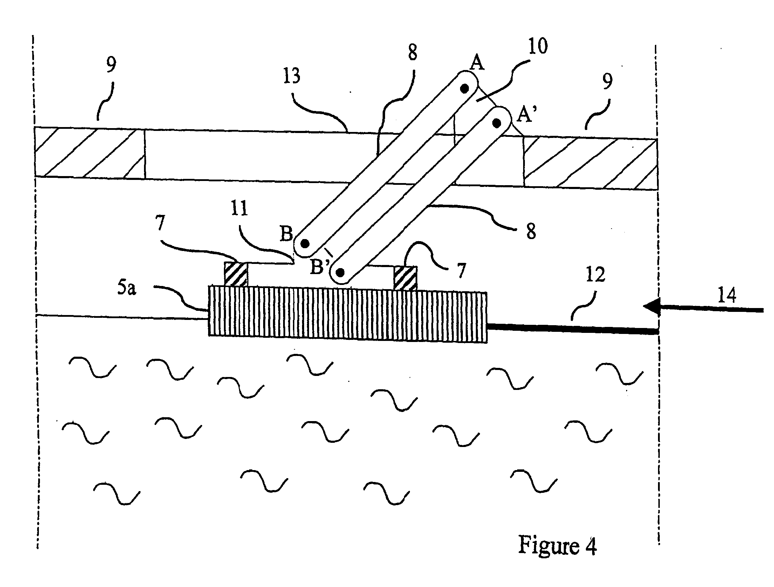

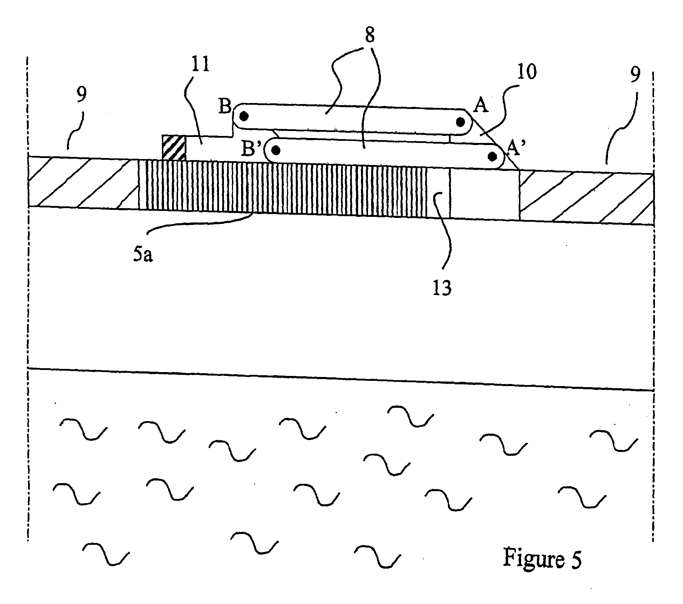

Selon la représentation de la figure 3, les éléments latéraux 5a et 5b du support flottant sont reliés au navire 1 respectivement par l'intermédiaire de deux bras 8, lesdits bras 8 étant reliés de manière rotative aux flotteurs latéraux 5a et 5b autour de deux axes de rotation B et B' et au navire 1 au niveau du plafond 9 du canal latéral CL autour de deux axes de rotation A et A', les axes de rotation A, A', B et B' étant parallèles au plan général du navire 1. Selon cette réalisation, les bras 8 sont reliés à l'élément latéral 5a ou 5b par l'intermédiaire d'une chape fixée elle-même à l'élément latéral 5a ou 5b ou faisant partie intégrante de l'élément latéral 5a et 5b. Selon toujours la même réalisation, les bras 8 sont fixés au navire 1 au niveau du plafond 9 du canal latéral CL par l'intermédiaire d'une chape 10 situé au niveau d'un logement aménagé 13 de réception de support flottant quand celui-ci est en phase de repos. Ainsi, le support flottant 5a, 5b, 7 est relié au plafond 9 par ces bras 8 constituant un système de suspension articulé à parallélogramme maintenant ledit support dans un plan parallèle au plan général du navire 1 comme le montrent bien les figures 4 et 5 : fig. 4 le support flottant en position de travail et fig. 5 montrant le support flottant en position de repos.

Sur la figure 3, les moyens de récupération 6 sont en position de récupération et sont positionnés au niveau de la ligne de flottaison de manière à être au bon niveau de la nappe 12 de produits polluants. De plus, la circulation libre de l'eau, due à l'avancement du navire 1, dans les canaux latéraux CL crée un effet d'entraînement de la nappe 12 de matières polluantes flottant à la surface de l'eau et évite ainsi un effet de blocage de celle-ci.

Comme dit ci-dessus, les figures 4 et 5 représentent une coupe verticale d'un canal latéral CL du navire 1 montrant respectivement les moyens de récupération 6 en position de récupération et en position de repos. Sur ces figures, les bras 8 sont clairement représentés de manière à expliciter le mouvement du support flottant 5a, 5b, 7 entre sa position de récupération et sa position de repos. Grâce aux bras 8 fixés de manière rotative aux flotteurs latéraux 5a et 5b et au navire 1 au niveau du plafond 9 du canal latéral CL, les moyens de récupération 6, non représentés sur ces deux dernières figures, se déplacent dans des plans parfaitement parallèles au plan général du navire 1 et cela quelles que soient les conditions climatiques.

Au niveau du plafond 9 du canal latéral CL, il est prévu un logement de réception 13 du support flottant 5a, 5b, 7, ce logement de réception 13 étant en fait une ouverture dans le plafond 9. Ainsi et de manière avantageuse, lorsqu'on est en position de repos, les moyens de récupération 6 sont facilement accessibles pour l'entretien, la maintenance et surtout pour le remplacement d'un moyen particulier de récupération par un autre en fonction du type de matières polluantes à récupérer. Cette ouverture 13 est réalisable du fait de la grandeur du navire qui offre une large surface de pont par rapport à la surface porteuse du support flottant 5a, 5b, 7 et des moyens de récupération 6, aussi les ponts du trimaran sont réalisables de la sorte sur la base d'un treillis à larges poutres tout en conservant sa tenue mécanique.

Cette ouverture 13 présente aussi un grand avantage en position de récupération car elle offre ainsi une fenêtre d'observation.

Selon une réalisation non représentée, il est possible de prévoir des moyens de dispersion de produit dispersant positionné au niveau du support flottant 5a, 5b, 7 en particulier au niveau de la poutre 7 arrière.

Le navire 1 selon l'invention permet ainsi de récupérer des produits polluants à la surface de l'eau et ainsi de traiter et stocker les produits polluants récupérés dans la coque centrale 2. Du fait de la grande taille de ce navire dépollueur, il offre une grande capacité de récupération sans nécessité de retour au port pour décharger. Ainsi la récupération des matières polluantes est rapide et peut être effectuée avant qu'elles n'atteignent le rivage le plus proche. Le navire selon l'invention permet ainsi d'intervenir rapidement sur la zone polluée et de recueillir de manière optimale des produits pétroliers de faible ou de forte viscosité.

## Revendications

1. Navire de récupération de produits polluants de type hydrocarbure flottant à la surface d'une étendue d'eau, ledit navire (1) étant un trimaran comprenant une coque centrale (2) et deux flotteurs latéraux (3) créant deux canaux latéraux (CL), et que des moyens de récupération (6) desdits produits polluants sont positionnés entre ladite coque centrale (2) et chacun desdits flotteurs latéraux (3), **caractérisé en ce que**, d'une part, ladite coque centrale (2) est pourvue de zones de traitement/décantation et de cuves de stockage des produits polluants qui ont été récupérés par lesdits moyens de récupération (6) et que, d'autre part, ces derniers sont situés au voisinage du point tranquille (4) de navire c'est à dire au niveau de l'axe de rotation du navire au tangage.

2. Navire selon la revendication 1, **caractérisé en ce que** lesdits moyens de récupération (6) sont conçus de manière modulaire.

3. Navire selon l'une des revendications 1 ou 2, **caractérisé en ce que** lesdits moyens de récupération (6) sont positionnés, pour chaque canal latéral (CL) sur un support flottant (5a, 5b, 7) relié à un plafond de liaison (9) du flotteur latéral correspondant (3) à la coque centrale (2).

4. Navire selon la revendication 3, **caractérisé en ce que** un dit support flottant (5a, 5b, 7) comprend deux éléments latéraux flottant (5a, 5b) reliés entre eux par au moins deux poutres (7) situées respectivement à l'avant et à l'arrière desdits éléments (5a, 5b) dans leur partie supérieure et **en ce que** lesdits moyens de récupération (6) sont positionnés entre ces deux éléments latéraux et les deux dites poutres (7) et au niveau de la ligne de flottaison du support flottant.

5. Navire selon la revendication 4, **caractérisé en ce que** lesdits éléments latéraux flottants (5a, 5b) présentent sur leur partie avant une forme biseautée créant une ouverture (14) en V.

6. Navire selon l'une des revendications 3 à 5, **caractérisé en ce que** la largeur d'un dit support flottant (5a, 5b, 7) est sensiblement égale à la largeur d'un canal latéral (CL) et **en ce que** les moyens de récupération (6) présentent une largeur sensiblement égale à la distance entre les deux dits éléments latéraux flottants (5a, 5b).

7. Navire selon l'une des revendications 3 à 6, **caractérisé en ce qu'**un dit support flottant (5a, 5b, 7) est relié audit plafond (9) par un système de suspension articulé à parallélogramme maintenant ledit support flottant dans un plan parallèle au plan général du navire.

8. Navire selon l'une des revendications 3 à 6, **caractérisé en ce qu'**un dit support flottant (5a, 5b, 7) est relié audit plafond (9) par des moyens coulissants perpendiculaires au plan général du navire (1).

9. Navire selon l'une des revendications 3 à 8, **caractérisé en ce que** ledit plafond (9) présente un logement de réception (13) dudit support flottant (5a, 5b, 7).

10. Navire selon la revendication 1, **caractérisé par le fait que** les moyens de récupération (6) sont montés mobiles verticalement dans leur canal (CL) entre la coque centrale (2) et un flotteur latéral (3) de sorte qu'ils peuvent soit être escamotés vers le haut dans une position de repos, soit être abaissés dans une position active au niveau de la ligne de flottaison.

## Claims

1. Ship for recovering hydrocarbon type pollutant products floating on the surface of a body of water, said ship (1) taking the form of a trimaran comprising a central hull (2) and two lateral floats (3) creating two lateral passages (CL) and means (6) for recovering said pollutant products being positioned between said central hull (2) and each of said lateral floats (3), **characterized in that**, on the one hand, said central hull (2) is provided with treatment/settling areas and tanks for storing pollutants recovered by said recovery means (6) and, on the other hand, the latter are situated in the vicinity of the still point (4) of the ship, i.e. at the pitching axis of the ship.

2. Ship according to Claim 1, **characterized in that** said recovery means (6) are of modular design.

3. Ship according to either of Claims 1 and 2, **characterized in that** in each lateral passage (CL) said recovery means (6) are located on a floating support (5a, 5b, 7) connected to a ceiling (9) connecting the corresponding lateral float (3) to the central hull (2).

4. Ship according to Claim 3, **characterized in that** one said floating support (5a, 5b, 7) comprises two lateral floating members (5a, 5b) interconnected by at least two beams (7) situated at the front and at the rear of the upper portion of said members (5a, 5b) and **in that** said recovery means (6) are positioned between said two lateral members and said two beams (7) and at the level of the waterline of the floating support.

5. Ship according to Claim 4, **characterized in that** a front portion of the lateral floating members (5a, 5b) has a bevelled shape creating a V-shaped opening (14).

6. Ship according to any of Claims 3 to 5, **characterized in that** the width of one said floating support (5a, 5b, 7) is substantially equal to the width of a lateral passage (CL) and **in that** the recovery means (6) have a width substantially equal to the distance between said two lateral floating members (5a, 5b).

7. Ship according to any of Claims 3 to 6, **characterized in that** one said floating support (5a, 5b, 7) is connected to said ceiling (9) by a hinged parallelogram suspension system for maintaining said floating support on a plane parallel to the general plane of the ship.

8. Ship according to any of Claims 3 to 6, **characterized in that** one said floating support (5a, 5b, 7) is connected to said ceiling (9) by means of sliding perpendicular to the general plane of the ship (1).

9. Ship according to any of Claims 3 to 8, **characterized in that** said ceiling (9) includes a housing (13) for receiving said floating support (5a, 5b, 7).

10. Ship according to Claim 1, **characterized in that** the recovery means (6) are vertically mobile in their passage (CL) between the central hull (2) and a lateral float (3) so that they can be either retracted upward into a rest position or lowered into an active position at the level of the waterline.

## Patentansprüche

1. Schiff zum Aufnehmen von auf einer ausgedehnten Wasseroberfläche schwimmenden verunreinigenden Produkten des Typs Kohlenwasserstoffe, wobei das Schiff (1) ein Trimaran ist, der einen zentralen Rumpf (2) und zwei Seitenschwimmer (3) aufweist, die zwei Seitenkanäle (CL) bilden, und wobei Aufnahmemittel (6) zur Aufnahme der verunreinigenden Produkte zwischen dem zentralen Rumpf (2) und jedem der Seitenschwimmer (3) angeordnet sind, **dadurch gekennzeichnet, dass** einerseits der zentrale Rumpf (2) mit Behandlungs/Klärungszonen und Behältern zur Aufbewahrung der verunreinigenden Produkte, die von den Aufnahmemitteln (6) aufgenommen worden sind, versehen ist, und **dadurch**, dass andererseits letztere in Nachbarschaft des Schiffsruhepunkts (4), das heißt, im Bereich der Stampfrotationsachse des Schiffs, angeordnet sind.

2. Schiff nach Anspruch 1, **dadurch gekennzeichnet, dass** die Aufnahmemittel (6) modulartig konzipiert sind.

3. Schiff nach einem der Ansprüche 1 oder 2, **dadurch gekennzeichnet, dass** für jeden Seitenkanal (CL) die Aufnahmemittel (6) an einem schwimmenden Träger (5a,5b,7) angeordnet sind, der mit einer Verbindungsdecke (9) verbunden ist, die den entsprechenden Seitenschwimmer (3) mit dem zentralen Rumpf (2) verbindet.

4. Schiff nach Anspruch 3, **dadurch gekennzeichnet, dass** der schwimmende Träger (5a,5b,7) zwei schwimmende Seitenelemente (5a,5b) aufweist, die über mindestens zwei Balken (7) miteinander verbunden sind, die jeweils im vorderen und hinteren Bereich der Elemente (5a,5b) in ihrem oberen Teil angeordnet sind, und **dadurch**, dass die Aufnahmemittel (6) zwischen diesen zwei Seitenelementen und den zwei Balken (7) und in Höhe der Wasserlinie des schwimmenden Trägers angeordnet sind.

5. Schiff nach Anspruch 4, **dadurch gekennzeichnet, dass** die schwimmenden Seitenelemente (5a,5b) an ihrem vorderen Teil eine abgeschrägte Form aufweisen, die eine V-förmige Öffnung (14) bildet.

6. Schiff nach einem der Ansprüche 3 bis 5, **dadurch gekennzeichnet, dass** die Breite des schwimmenden Trägers (5a,5b,7) im Wesentlichen gleich der Breite eines Seitenkanals (CL) ist, und **dadurch**, dass die Aufnahmemittel (6) eine Breite aufweisen, die im Wesentlichen gleich dem Abstand zwischen den zwei schwimmenden Seitenelementen (5a,5b) ist.

7. Schiff nach einem der Ansprüche 3 bis 6, **dadurch gekennzeichnet, dass** der schwimmende Träger (5a,5b,7) über ein gelenkiges Parallelogramm-Aufhängungssystem, das den schwimmenden Träger in einer zur allgemeinen Ebene des Schiffs parallelen Ebene hält, mit der Decke (9) verbunden ist.

8. Schiff nach einem der Ansprüche 3 bis 6, **dadurch gekennzeichnet, dass** der schwimmende Träger (5a,5b,7) über gleitende Mittel, die senkrecht zur allgemeinen Ebene des Schiffs (1) sind, mit der Decke (9) verbunden ist.

9. Schiff nach einem der Ansprüche 3 bis 8, **dadurch gekennzeichnet, dass** die Decke (9) einen Raum (13) zur Aufnahme des schwimmenden Trägers (5a,5b,7) aufweist.

10. Schiff nach Anspruch 1, **dadurch gekennzeichnet, dass** die Aufnahmemittel (6) in ihrem Kanal (CL) zwischen dem zentralen Rumpf (2) und einem Seitenschwimmer (3) vertikal beweglich angebracht sind, so dass sie sowohl nach oben in eine Ruheposition eingezogen als auch in eine aktive Position auf die Höhe der Wasserlinie abgesenkt werden können.
